Europäisches Patentamt

European Patent Office

Office européen des brevets

(19)

(11) Veröffentlichungsnummer: **0 337 981**
**A2**

## (12) EUROPÄISCHE PATENTANMELDUNG

(21) Anmeldenummer: **89890105.3**

(22) Anmeldetag: **11.04.89**

(51) Int. Cl.⁴: **B 60 S 1/68**

(30) Priorität: **11.04.88 AT 939/88**

(43) Veröffentlichungstag der Anmeldung:
**18.10.89 Patentblatt 89/42**

(84) Benannte Vertragsstaaten:
**BE CH DE FR GB IT LI NL SE**

(71) Anmelder: **Austria Metall Aktiengesellschaft**
**A-5282 Braunau am Inn (AT)**

(72) Erfinder: **Garnweidner, Peter**
**Otto v. Lilienthalstrasse 32**
**A-5020 Salzburg (AT)**

(74) Vertreter: **Hain, Leonhard, Dipl.-Ing.**
**Tal 18/IV**
**D-8000 München 2 (DE)**

(54) **Abstreifer für körniges Gut und Steine.**

(57) Abstreifer für körniges Gut und Steine, wobei der Abstreifer am Wagenbau drehbar gelagert ist und ein Reinigungskeil zwischen die Zwillingsräder ragt und beidseitig eine Rolle angeordnet ist, die auf den Laufflächen der Räder abrollt.

Fig. 1

EP 0 337 981 A2

Bundesdruckerei Berlin

## Beschreibung

### Abstreifer für körniges Gut und Steine

Bei Fahrzeugen, die im Baustelleneinsatz oder auf weichem Grund verwendet werden, müssen, bevor sie auf normalen Straßen fahren, die Zwillingsreifen auf zwischen ihnen steckende Steine untersucht und diese gegebenenfalls entfernt werden.

Erfolgt eine solche Untersuchung nicht und bleibt ein Stein oder ähnliches zwischen den Reifen eingeklemmt, so kann dieser bei der Fahrt auf der Straße bei höherer Geschwindigkeit aus dem Reifenzwischenraum durch die Zentrifugalkräfte herausgerissen werden. Die so wegfliegenden Steine sind eine mögliche Unfallgefahr.

Das Untersuchen der Fahrzeuge benötigt Zeit, der Fahrer oder eine Hilfsperson müssen die Zwillingsräder der Wagen kontrollieren und eventuell vorhandene Steine aus ihren Zwischenräumen entfernen. Dazu muß der Wagen stehen bleiben, wodurch bei der Straßenausfahrt zusätzlich Platz nötig ist.

Erfindungsgemäß wird dadurch Abhilfe geschaffen, daß der Abstreifer aus einer stabförmigen, an einem Ende drehbaren Halterung besteht, die an ihrem anderen Ende einen Reinigungskeil angeordnet hat, der zwischen die Zwillingsräder, vorzugsweise von Fahrzeugen, ragt.

Dadurch kann bereits das Einklemmen von Steinen in der Baustelle verhindert werden, da diese sofort wieder aus dem Raum zwischen den Zwillingsrädern entfernt werden. Dadurch dringt der Stein meist gar nicht so tief ein und sitzt daher auch nicht so stark fest, da er bei lediglich einer Umdrehung bis zum Rausziehen aus dem Zwischenraum gar nicht so tief eingefahren wird.

Das Aussteigen und die Kontrolle der Reifen mit eventuellem Herausdrücken von Steinen entfällt. Zusätzlich werden auch noch die Reifenwände geschont.

In weiterer Ausgestaltung der Erfindung kann im Bereich der Reinigungskeilbefestigung an der Halterung beidseitig jeweils mindestens eine Rolle angeordnet sein, die gemeinsame Drehachse der Rollen normal zur Längserstreckung der Halterung stehen und die Rollen auf den Laufflächen der Zwillingsräder abrollen.

Eine weitere mögliche Ausgestaltung kann so geschehen, daß ein elastischer Körper, der sowohl ein Pneumatikzylinder, als auch eine Feder, oder eine Feder, kombiniert mit Dämpfer sein kann, die Halterung gegen die Zwillingsräder drückt. So kann der Abstreifer gut den Federbewegungen folgen und es ist sichergestellt, daß er immer im richtigen Abstand zu den Laufflächen steht.

Weiters ist es auch günstig, die Abstützung des elastischen Körpers entweder am Wagenbau bzw. Chassis, oder an der Halterung verschieblich auszuführen und je nach Verschiebungsrichtung, die Halterung zu oder von den Zwillingsrädern schwenkt. Auf diese Art kann der Abstreifer bei der Fahrt auf der Straße weggeklappt werden.

In der Halterung kann auch ein Torsionsgelenk eingebaut werden oder der Federkörper in Kugelgelenken gelagert sein. Dadurch können die Verdrehkräfte im Abstreifer vermieden werden.

Die Erfindung wird anhand der nachstehenden Zeichnungen beschrieben.

Es zeigen:

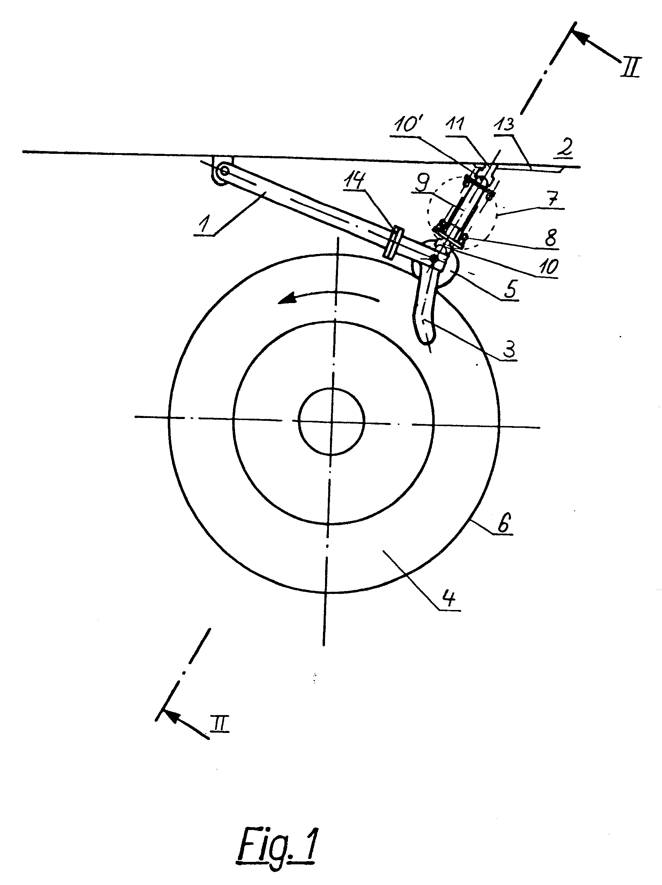

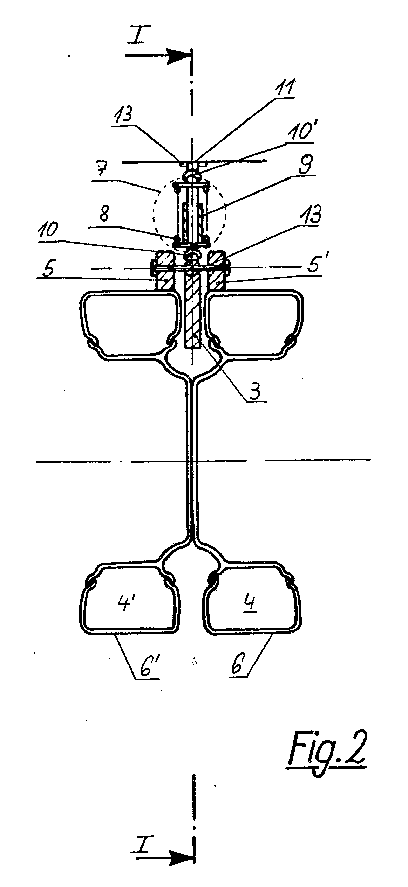

Fig. 1 einen Schnitt längs I-I in Fig. 2.

Fig. 2 einen Schnitt längs II-II in Fig. 1.

Fig. 3 einen Schnitt durch eine Variante, wobei die Schnittebene zwischen den Zwillingsrädern normal zur Achse der Räder ist.

Die Halterung 1 ist im Wagenbau 2 drehbar angebracht. Am anderen Ende der Halterung 1 ist ein Reinigungskeil 3, der zwischen die Zwillingsräder 4, 4' ragt, angeordnet. Die Rollen 5, 5' laufen auf den Laufflächen 6, 6' der Zwillingsräder 4, 4'. Der Federkörper 7 stützt sich am Wagenbau 2 ab und drückt die Halterung 1 gegen die Laufflächen 6 und 6'. Dadurch ist eine exakte Führung des Reinigungskeiles 3 zwischen den Zwillingsrädern 4 und 4' möglich.

Der Federkörper 7 besteht aus der Feder 8 und dem Dämpfer 9. Er ist mittels Kugelgelenk 10 an der Halterung 1 und mittels Kugelgelenk 10' am Wagenbau 2 angelenkt.

Durch Verschieben des Auflagerpunktes 11 unter dem Kugelgelenk 10' längs der Führung 12 kann die Halterung 1 hochgeklappt oder die Vorspannung für den Federkörper 7 verändert werden.

Die Rollen 5 und 5' sind auf der Achse 13, die normal auf die Halterung 1 steht, gelagert.

Durch das Torsionsgelenk 14 wird die durch einseitiges Einfedern einer Zwillingsräderachsenaufhängung auftretende Verdrehung der Achse 4 der Rollen 5 und 5' ausgeglichen und es treten dadurch in der Halterung 1 keine Torsionskräfte auf.

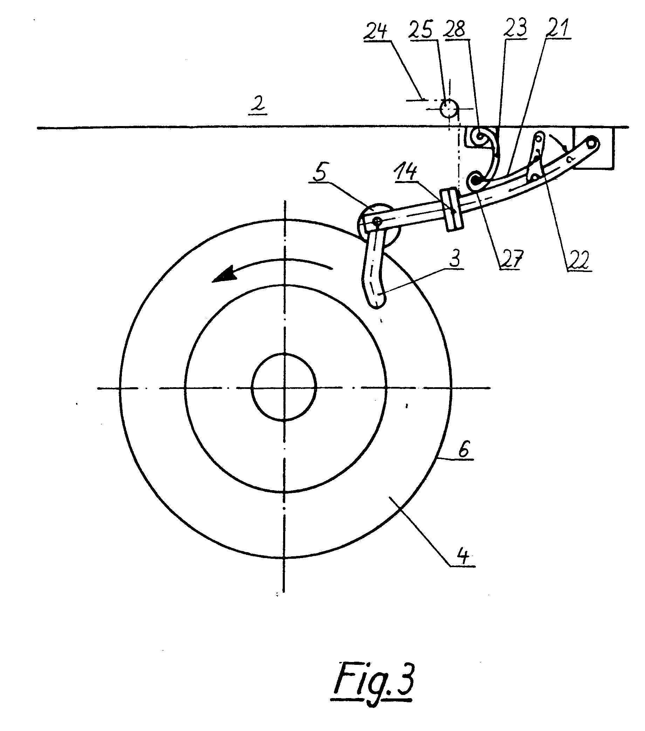

Fig. 3 zeigt eine alternative Variante mit verschieblich ausgeführter Abstützung 20 des Federkörpers 7 an der Halterung 1. Durch die Strebe 21 und den Hebel 22 kann der Auflagepunkt 27 des elastischen Körpers 23, der drehbar im Lager 28 angeordnet ist, verschoben werden und damit die Vorspannung auf die Laufflächen 6 und 6' der Zwillingsräder 4 und 4' erhöht werden.

Nach Wegklappen des elastischen Körpers kann die Halterung 1 durch den Seilzug 24, der über eine Rolle 25 umgelenkt wird, hochgezogen werden.

Die Erfindung ist nicht auf die dargestellten Ausführungen beschränkt, sondern es sind diese nur beispielhaft.

### Patentansprüche

1. Abstreifer für körniges Gut und Steine, dadurch gekennzeichnet, daß der Abstreifer aus einer stabförmigen, an einem Ende drehbaren Halterung (1) besteht, die an ihrem anderen Ende einen Reinigungskeil (3) angeordnet hat, der zwischen die Zwillingsräder (4, 4'), vorzugsweise von Fahrzeugen, ragt.

2. Abstreifer nach Anspruch 1, dadurch gekennzeichnet, daß im Bereich der Reinigungskeilbefestigung (3) an der Halterung (1) beidseitig jeweils mindestens eine Rolle (5, 5') angeordnet ist, die gemeinsame Drehachse der Rolle (5, 5') normal zur Längserstreckung der Halterung (1) steht und diese Rollen (5, 5') auf den Laufflächen (6, 6') der Räder abrollen.

3. Abstreifer nach Anspruch 1, dadurch gekennzeichnet, daß die Halterung (1) durch einen elastischen Körper (7) in Richtung der Zwillingsräder (4, 4') gedrückt wird.

4. Abstreifer nach Anspruch 3, dadurch gekennzeichnet, daß der Federkörper (7) einen Dämpfer (9) besitzt.

5. Abstreifer nach einem der vorhergehenden Ansprüche, dadurch gekennzeichnet, daß die Abstützung des elastischen Körpers (7) entweder am Wagenbau (2) bzw. am Chassis, oder an der Halterung (1) verschieblich ausgeführt ist und je nach Verschiebungsrichtung die Halterung (1) zum oder vom Rad schwenkt.

6. Abstreifer nach einem der vorhergehenden Ansprüche, dadurch gekennzeichnet, daß die Halterung (1) ein Torsionsgelenk (14) aufweist.

7. Abstreifer nach einem der vorhergehenden Ansprüche, dadurch gekennzeichnet, daß der Federkörper (7) mittels eines Kugelgelenkes (10') an der Halterung (1) schwenkbar gelagert ist.

_Fig.1_

*Fig.2*

*Fig.3*